# EUROPÄISCHE PATENTSCHRIFT

(11) **EP 3 688 507 B1**
(45) Veröffentlichungstag und Bekanntmachung des Hinweises auf die Patenterteilung: **21.02.2024**
(21) Anmeldenummer: 18769643.0
(22) Anmeldetag: 11.09.2018
(51) Int. Cl.: G02B 21/22, G02B 21/36, G02B 27/14, G02B 25/00, G02B 26/08

(54) **VORRICHTUNG ZUR AUSKOPPLUNG EINES TEILES DER STRAHLUNG EINES JEDERZEIT FREI WÄHLBAREN BEOBACHTUNGSSTRAHLENGANGES EINES BINOKULARS**
DEVICE FOR DECOUPLING PART OF THE RADIATION OF AN OBSERVATION BEAM PATH OF BINOCULARS THAT IS FREELY SELECTABLE AT ANY TIME
DISPOSITIF D'EXTRACTION D'UNE PARTIE DU RAYONNEMENT D'UN TRAJET OPTIQUE D'OBSERVATION D'UNE BINOCULAIRE LIBREMENT SÉLECTIONNABLE À TOUT MOMENT

(30) Priorität: 29.09.2017 DE 102017217378
(43) Veröffentlichungstag der Anmeldung: 05.08.2020
(73) Patentinhaber: Carl Zeiss Meditec AG, 07745 Jena (DE)
(72) Erfinder: KOSCHMIEDER, Ingo, 07743 Jena (DE); MARTIN, Dietrich, 07743 Jena (DE); LINK, Günter, 07778 Lehesten (DE); MÜLLER, Lothar, 07646 Ottendorf (DE)
(74) Vertreter: Kintzel, Klaus-Peter
(86) Internationale Anmeldenummer: PCT/EP2018/074361
(87) Internationale Veröffentlichungsnummer: WO 2019/063276

(56) Entgegenhaltungen:
- EP-A1- 1 538 471
- EP-A2- 1 235 094
- DE-A1-102006 050 846
- DE-A1-102015 214 082

## Beschreibung

Die vorliegende Erfindung betrifft eine technische Lösung mit der der für eine fotographische Dokumentation oder eine Mitbeobachtereinrichtung zu nutzende Strahlengang eines optischen Gerätes mit Binokular jederzeit frei gewählt und auch gewechselt werden kann, ohne dass dafür bauliche Veränderungen erforderlich sind.

Obwohl aus dem Stand der Technik zahlreiche Lösungen vorliegen, die zum Beispiel Wechseleinrichtung für Vergrößerungsstufen oder Beleuchtungsvarianten betreffen, sind Lösungen für die Wahl der zur Dokumentation zu nutzende Beobachtungsstrahlenganges eines optischen Gerätes mit Binokular kaum bekannt.

Hierzu beschreibt die DE 26 31 118 A1 ein Binokular-Tubus für Mikroskope, an dessen Oberseite ein Stutzen zum Ansetzen von Zusatzgeräten, wie einer Kamera vorgesehen ist. Über ein Umlenkprisma mit teildurchlässigen Spiegelflächen erfolgt die Aufteilung des Hauptstrahlenganges in Richtung des Stutzens sowie in Richtung des Binokular-Tubusses. Die Auskopplung eines Detektionsstrahlenganges erfolgt bei dieser Lösung somit nicht aus einem Beobachtungsstrahlengang sondern bereits davor aus dem Hauptstrahlengang. Dafür sind eine Optik und ein Tripelspiegel vorgesehen.

Aus der DE 196 22 357 A1 ist eine Wechselvorrichtung zum Umschalten der Betriebsarten eines Mikroskoptubus zwischen den Stellungen Beobachtung, Aufzeichnung sowie gleichzeitiger Beobachtung und Aufzeichnung bekannt. Hierzu sind drei optische Elemente, nämlich ein vollständig reflektierendes erstes Element, ein teildurchlässiges zweites Element sowie ein Ausgleichselement zum Ausgleich der optischen Weglänge als drittes optisches Element vorgesehen. Das erste und das zweite Element sind auf separaten Führungsschlitten befestigt, die zueinander verschiebbar angeordnet sind. Je nach gewünschter Arbeitsposition werden die optischen Elemente in oder aus dem Strahlengang gefahren, indem sie linear entlang von Führungsstangen verschoben werden.

Beide Lösungen bieten weder die Möglichkeit einer Auswahl des für eine Auskopplung zu nutzende Beobachtungsstrahlenganges, noch ist ein Wechsel des genutzten Beobachtungsstrahlenganges möglich.

Viele zur Dokumentation an stereoskopischen Beobachtungsgeräten genutzte Komponenten nutzen jedoch einen der beiden Beobachtungsstrahlengänge. Je nach Bauform ist ein Beobachtungsstrahlengang mechanisch festgelegt, so dass keine Möglichkeit besteht zwischen beiden Beobachtungsstrahlengängen umzuschalten. Letzteres ist nachteilig, wenn dieser fest vorgegebene Kanal nicht mit dem Führungsauge des Nutzers übereinstimmt, da der visuelle Eindruck dieses Auges das subjektive Bild des Beobachters bestimmt. Im nicht übereinstimmenden Fall hat der Nutzer den Eindruck, dass der dokumentierte Bildeindruck nicht mit dem visuell wahrgenommenen übereinstimmt.

Manche der dabei verbaute Komponenten lassen sich in dem System unterschiedlich, z. B. 0° bzw. 180° bezüglich zum Beobachtungsstrahlengang einbauen, so dass in dieser Phase des Aufbaus entschieden werden kann, welcher der beiden Beobachtungsstrahlengänge für eine Auskopplung genutzt wird. In dieser Phase besteht zwar eine Möglichkeit das System auf seine persönlichen Bedürfnisse abzustimmen, nach dieser Entscheidung ist der Aufbau allerdings wieder vorgegeben und kann nicht ohne erneuten Umbau verändert werden.

Eine Wechselvorrichtung für optische Elemente in Stereomikroskopen wird in der DE 103 56 154 B4 beschrieben. Mit dieser drehbaren Wechselvorrichtung ist jeweils ein Paar optischer Elemente in beide Beobachtungsstrahlengänge eines Stereomikroskops einbringbar, wobei der Abstand der Elemente jedes Paares der Stereobasis der Stereokanäle entspricht. Erfindungsgemäß sind mehrere optische Elemente um das Zentrum der Wechselvorrichtung kreisringförmig, nebeneinander angeordnet, wobei das Zentrum der Wechselvorrichtung zur Mitte der Stereobasis der Stereokanäle auf der Wechselvorrichtung lateral verschoben ist. Mit einer Anordnung aus 5 optischen Elementen lassen sich so beispielsweise drei Arbeitspositionen einstellen, die sich als "Stereo-Beobachtung", "50%-Stereo-Beobachtung und 50%-Dokumentation" und "100%-Dokumentation und einkanalige Beobachtung" beschreiben lassen. Die hier vorgeschlagene Lösung bietet zwar die Möglichkeit die Auskopplung zu Dokumentationszwecken zu variieren (50% bzw. 100%) oder auszuschalten eine Wahl des für die Auskopplung zu nutzenden Beobachtungstrahlenganges ist jedoch nicht vorgesehen. Zudem wird für die hier vorgeschlagene Umschaltung ein erheblicher Bauraum benötigt, welcher den für das Optikdesign oder die mechanische Konstruktion zur Verfügung stehenden Bauraum einschränkt. Dies führt wiederrum zu einer Vergrößerung des umbauten Volumens für das Gesamtsystem, welches sich nachteilig auf die Nutzbarkeit solch eines Systems auswirkt. Weitere Möglichkeiten der Auskopplung sind in DE 10 2015 214 082 A1, DE 10 2006 050 846 B4 oder EP 1 235 094 A2 beschrieben.

Eine Umschaltung zwischen den beiden Beobachtungsstrahlengängen durch den Nutzer in Form eines einfach zu betätigenden Mechanismus ist bei keiner der bekannten Lösungen vorgesehen.

Der vorliegenden Erfindung liegt die Aufgabe zugrunde eine technische Lösung zu entwickeln, die es ermöglicht den für eine fotographische Dokumentation oder andere ähnliche Auskopplungen zu nutzende Strahlengang eines optischen Gerätes mit Binokular jederzeit frei zu wählen bzw. zu verändern, ohne dass dafür bauliche Veränderungen erforderlich sind. Die Wahl soll einfach und auch während der Beobachtung durch das Binokular möglich sein.

Diese Aufgabe wird mit der vorgeschlagenen Vorrichtung zur Auskopplung eines Teiles der Strahlung eines jederzeit frei wählbaren Beobachtungsstrahlenganges eines Binokulars, dadurch gelöst, dass in dem Gehäuse mit dem Binokular eine drehbare Trageinheit angeordnet ist, deren Drehachse parallel zu den Achsen der Beobachtungsstrahlengänge liegt, dass auf dieser Trageinheit drei optische Elemente versetzt angeordnet sind, wobei sich ein äußeres und das mittlere optische Element in jeweils einem der Beobachtungsstrahlengänge befinden, dass sich nach Drehung der Trageinheit das mittlere und das andere äußere optische Element in jeweils einem der Beobachtungsstrahlengänge befinden und dass die beiden äußeren optischen Elemente über eine strahlteilende Wirkung verfügen und so auf der Trageinheit angeordnet sind, dass für den Fall, dass sie sich in einem der Beobachtungsstrahlengänge befinden, die Auskopplung eines Teiles der Beobachtungsstrahlung in einen gemeinsamen Dokumentationsstrahlengang erfolgt.

Während die Aufgabe erfindungsgemäß durch die Merkmale des unabhängigen Anspruchs gelöst wird, sind bevorzugte Weiterbildungen und Ausgestaltungen Gegenstand der abhängigen Ansprüche.

Erfindungsgemäß wird durch Drehung der Trageinheit der für die Auskopplung genutzte Beobachtungsstrahlengang gewechselt, wobei die Drehung mechanisch oder auch motorisch erfolgen kann.

Die optischen Elemente mit strahlteilender Wirkung dienen der Auskopplung eines Teiles der Beobachtungsstrahlung in einen gemeinsamen Dokumentationsstrahlengang, wobei der Anteil der ausgekoppelten Strahlung bis zu 80%, vorzugsweise bis zu 50% beträgt.

Erfindungsgemäß können die auf der drehbaren Trageinheit angeordneten optischen Elemente auch genutzt, um über ein zusätzlich, gegenüber dem gemeinsamen Detektionsstrahlengang angeordnetes Display Daten einzukoppeln. Ein- und Auskopplung erfolgen dabei unabhängig voneinander, können aber auch kombiniert werden.

Zusätzlich lässt sich die die vorgeschlagene Vorrichtung mit spektralabhängigen Filtern und/oder festen oder variablen Blenden ergänzen, die jeweils im Beobachtungsstrahlengang und/oder im Dokumentationsstrahlengang angeordnet und wahlweise in den jeweiligen Strahlengang einbringbar sind.

Die vorgeschlagene technische Lösung ist insbesondere zur Auskopplung von Bilddaten aus einem frei wählbaren Beobachtungsstrahlengang eines Binokulars in einen Dokumentationsstrahlengang vorgesehen. Allerdings ist die erfindungsgemäße Vorrichtung für alle optischen Systeme geeignet, die über ein Binokular verfügen, bei denen eine Strahlteilung eines der Beobachtungsstrahlengänge erforderlich ist und der für die Auskopplung zu nutzende Beobachtungsstrahlengang variierbar sein muss.

Die Erfindung wird nachfolgend anhand von Ausführungsbeispielen näher beschrieben. Dazu zeigen
- Figur 1:: eine schematische Darstellung der Lösung zur Auskopplung aus dem linken Beobachtungsstrahlengang eines Binokulars,
- Figur 2:: eine schematische Darstellung der Lösung zur Auskopplung aus dem rechten Beobachtungsstrahlengang eines Binokulars,
- Figur 3:: eine schematische Darstellung der Lösung zur Aus- und Einkopplung aus dem/in den linken Beobachtungsstrahlengang eines Binokulars.

Die vorgeschlagene Vorrichtung dient der Auskopplung eines Teiles der Strahlung eines jederzeit frei wählbaren Beobachtungsstrahlenganges eines Binokulars.

Erfindungsgemäß ist dazu in dem Gehäuse mit dem Binokular eine drehbare Trageinheit angeordnet ist, deren Drehachse parallel zu den Achsen der Beobachtungsstrahlengänge liegt. Auf dieser, beispielsweise als Platte ausgeführten Trageinheit, sind drei optische Elemente versetzt angeordnet, wobei sich ein äußeres und das mittlere optische Element in jeweils einem der Beobachtungsstrahlengänge befinden und nach Drehung der Trageinheit das mittlere und das andere äußere optische Element in jeweils einem der Beobachtungsstrahlengänge befinden. Dabei verfügen die beiden äußeren optischen Elemente über eine strahlteilende Wirkung verfügen und sind so auf der Trageinheit angeordnet, dass für den Fall, dass sie sich in einem der Beobachtungsstrahlengänge befinden, die Auskopplung eines Teiles der Beobachtungsstrahlung in einen gemeinsamen Dokumentationsstrahlengang erfolgt.

Mit der Erfindung wird es möglich, für die Auskopplung eines Dokumentationsstrahlenganges einen der beiden Beobachtungsstrahlengänge einfach und schnell auszuwählen, indem ein strahlteilendes optisches Element in den ausgewählten Beobachtungsstrahlengang durch drehen der Platte eingeschwenkt wird, während in dem anderen Beobachtungsstrahlengang ein optisches Element ohne optische Wirkung eingeschwenkt wird.

Die erste vorteilhafte Ausgestaltung betrifft die, beispielsweise als Platte ausgeführten drehbare Trageinheit, auf der die drei optischen Elemente um 90° versetzt, an dessen äußerem Rand angeordnet sind. Dabei befinden sich ein äußeres und das mittlere optische Element in jeweils einem der Beobachtungsstrahlengänge und nach Drehung der Platte um 90° das mittlere und das andere äußere optische Element in jeweils einem der Beobachtungsstrahlengänge.

Somit ergibt sich für die drehbare Platte ein Drehbereich von +/- 90°. In deren Endlagen verfügt die drehbare Platte über Anschläge oder Raststellungen. Die beiden Endlagen sollten dabei dem Bediener haptisch klar erkennbar sein.

Vorteilhafter Weise kann der Umschaltmechanismus so ausgestaltet werden, dass sich die drehbare Platte nach einer Initialbewegung von allein in eine der beiden (stabilen) Endlagen bewegt, d.h. dass der Verstellbereich bi-stabil ausgelegt ist.

Da die Platte mit nur drei optischen Elementen belegt ist, kann die nicht belegte Fläche der vorzugsweise kreisförmigen Platte abgeschnitten werden, wodurch sich der erforderliche Bauraum wesentlich verringern lässt.

Der eher geringe Drehbereich von +/- 90° ermöglicht es, dass die Drehung manuell erfolgen kann. Dazu ist ein Betätigungselement in Form eines Hebels vorhanden, der direkt oder indirekt an die drehbare Platte angreift. Als indirekte Verbindung zwischen Hebel und drehbarer Platte sind Ketten, Seile oder Schubstangen denkbar. Dabei ist anhand der Stellung des Hebels erkennbar, aus welchem Beobachtungsstrahlengang momentan die Auskopplung erfolgt.

Einer bevorzugten Variante entsprechend ist ein Betätigungselement in Form eines Schalters vorhanden, der mit einem, an der drehbaren Platte angeordneten motorischen Antrieb verbunden ist.

Dies hat zum einen den Vorteil, dass der Schalter an einer ergonomisch günstigen Stelle positioniert werden kann. Wenn die Umschaltung zwischen den beiden Auskoppelvarianten schnell genug erfolgt, bietet dies zum anderen die Möglichkeit Stereoaufnahmen vom Untersuchungsobjekt zu erzeugen. Dazu würden nacheinander aus beiden Beobachtungsstrahlengängen ausgekoppelte Bilddaten aufgenommen und in einem Datenspeicher abgelegt werden, wobei jedes der Bilder als Bestandteil eines Stereobildpaares markiert ist. Vorzugsweise sollte auch bei dieser Variante erkennbar sein, aus welchem Beobachtungsstrahlengang momentan die Auskopplung erfolgt. Dies kann hierbei durch die Stellung des Schalters oder eine separate Anzeige erfolgen.

Die zweite vorteilhafte Ausgestaltung betrifft die Elemente mit strahlteilender Wirkung, die als Strahlteilerwürfel ausgestaltet sind und aus Glas, Kunststoff oder einem anderen optisch transparenten Material bestehen können.

In einer anderen Ausführungsvariante sind die Elemente mit strahlteilender Wirkung als planparallele Platte ausgestaltet.

Zu bevorzugen ist die Ausgestaltung als Strahlteilerwürfel, da es hierbei nicht zu einem Strahlversatz kommt. Allerdings ist bei sehr kritischen Anwendungen die Verwendung eines optischen Elementes ohne optische Wirkung in dem nicht zur Auskopplung genutzten Beobachtungsstrahlengang zwingend erforderlich.

In Fällen in denen ein Strahlversatz im gesamten optischen System tolerieren werden können, ist die Verwendung planparalleler Platten möglich.

Unabhängig von deren Ausgestaltungsvariante beträgt der Anteil der aus einem Beobachtungsstrahlengang in einen gemeinsamen Dokumentationsstrahlengang ausgekoppelten Strahlung bis zu 80%, vorzugsweise bis zu 50%.

Einer besonders vorteilhaften Ausgestaltungentsprechend schließt der gemeinsame Dokumentationsstrahlengang mit den Beobachtungsstrahlengängen einen Winkel von 90° ein.

Der gemeinsame Dokumentationsstrahlengang verfügt vorzugsweise über eine Kamera zur Aufnahme von Bilddaten, wobei der Dokumentationsstrahlengang aus technischen und/oder ergonomischen Gründen noch über ein oder mehrere Spiegelelemente abgeknickt sein und weitere optische Elemente enthalten kann.

Die dritte vorteilhafte Ausgestaltung betrifft das zwischen den beiden äußeren optischen Elementen angeordnete, mittlere optische Bauelement, welches keine optische Wirkung aufweist.

Dieses optische Element ohne optische Wirkung dient ausschließlich dazu, unterschiedliche optische Weglängen zwischen beiden Beobachtungsstrahlengängen zu kompensieren.

Vorzugsweise ist dieses optische Element entsprechend den Elementen mit strahlteilender Wirkung als Würfel oder planparallele Platte ausgestaltet.

Im Fall der Ausgestaltung als planparallele Platten würde auch das optische Element ohne optische Wirkung als planparallele Platte ausgeführt werden oder könnte unter Berücksichtigung der damit verbundener Qualitätseinbußen eventuell entfallen.

In einer besonders vorteilhaften Variante weist das zwischen den beiden äußeren optischen Elementen angeordnete, mittlere optische Bauelement eine strahlschwächende Wirkung auf.

Dadurch ist es möglich die optischen Bildeindrücke beider Beobachtungsstrahlengänge einander anzugleichen. Dabei braucht die Abschwächung nicht genau dem prozentualen Anteil der Auskopplung entsprechen, sondern kann kleiner oder auch größer sein, da der visuelle Helligkeitseindruck eine relativ große Toleranz besitzt.

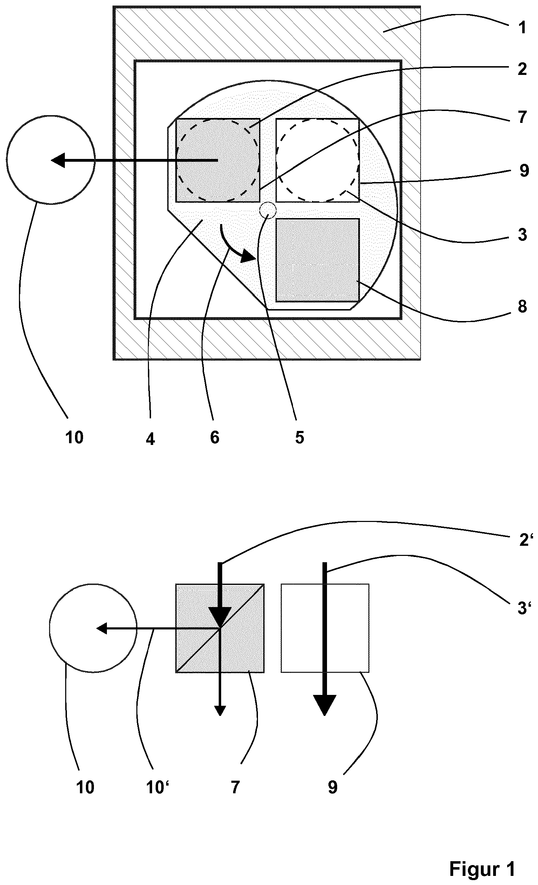

Hierzu zeigt die **Figur 1** eine schematische Darstellung der Lösung zur Auskopplung von Bilddaten aus dem linken Beobachtungsstrahlengang eines Binokulars.

Hierbei zeigt die obere Abbildung der **Figur 1** eine Schnittdarstellung senkrecht zu den optischen Beobachtungsachsen.

Bei der erfindungsgemäßen Vorrichtung ist in dem Gehäuse **1** mit (nicht dargestellten) Binokular eine drehbare Platte **4** angeordnet, deren Drehachse **5** parallel zu den Achsen der beiden Beobachtungsstrahlengänge **2** und **3** des Binokulars liegt. Mit dem Pfeil **6** wird hierbei die mögliche Drehbewegung der Platte **4** dokumentiert. Auf der Platte **4** sind drei Glaswürfel **7, 8** und **9** versetzt angeordnet, wobei sich die Glaswürfel **7** und **9** jeweils in einem der Beobachtungsstrahlengänge **2** und **3** befinden.

Der im Beobachtungsstrahlengang **2** befindliche Glaswürfel **7** ist als Strahlteilerwürfel ausgeführt und dient der Auskopplung eines Teiles der Strahlung des Beobachtungsstrahlenganges **2** in den gemeinsamen Dokumentationsstrahlengang **10.** Der im Beobachtungsstrahlengang **3** befindliche Glaswürfel **9** verfügt über keine optische Wirkung.

Die untere Abbildung der **Figur 1** zeigt eine schematische Darstellung der Auskopplung, senkrecht von oben in Bezug auf die von den Beobachtungsstrahlengängen aufgespannte Ebene gesehen.

Von dem im Beobachtungsstrahlengang **2** befindlichen Strahlteilerwürfel **7** wird ein Teil der Strahlung **2'** des Beobachtungsstrahlenganges **2** als Dokumentationsstrahl **10'** in einen Dokumentationsstrahlengang **10** ausgekoppelt. Der Strahlteilerwürfel **7** ist so auf der Platte **4** angeordnet, dass die Auskopplung der Strahlung **10'** in den Dokumentationsstrahlengang **10** im Winkel von 90° nach links erfolgt. Von dem im Beobachtungsstrahlengang **3** befindlichen Glaswürfel **9** wird der Strahlung **3'** des Beobachtungsstrahlenganges **3** nicht beeinflusst. Die Dicke der für die Darstellung der Strahlungen **2'**, **3'** und **10'** genutzten Pfeile soll gleichzeitig exemplarisch den Energiefluss dokumentieren.

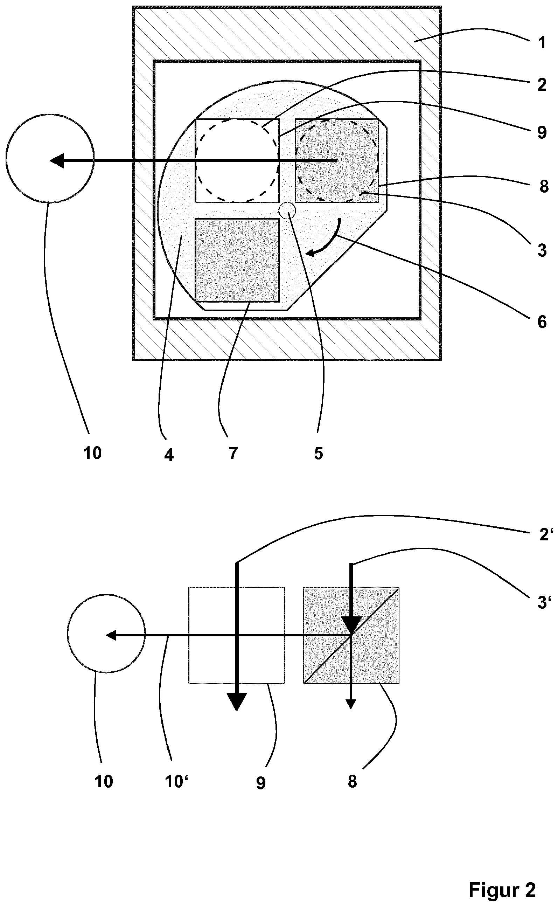

Im Gegensatz zur **Figur 1** zeigt die **Figur 2** eine schematische Darstellung der Lösung zur Auskopplung von Bilddaten nicht aus dem aus dem linken sondern dem rechten Beobachtungsstrahlengang eines Binokulars.

Dazu wurde die Platte **4** um 90° entgegen der Uhrzeigerrichtung gedreht. Durch diese Drehung wurde:
- der Strahlteilerwürfel **7** aus dem Beobachtungsstrahlenganges **2** heraus,
- der Glaswürfel **9** aus dem Beobachtungsstrahlengang **3** heraus und in den Beobachtungsstrahlengang **2** hinein, sowie
- der Strahlteilerwürfel **8** in den Beobachtungsstrahlenganges **3** hinein geschwenkt.

Die obere Abbildung der **Figur 2** zeigt wiederum eine Schnittdarstellung entlang der optischen Beobachtungsachsen.

Bei der erfindungsgemäßen Vorrichtung ist in dem Gehäuse **1** mit (nicht dargestellten) Binokular eine drehbare Platte **4** angeordnet, deren Drehachse **5** parallel zu den Achsen der beiden Beobachtungsstrahlengänge **2** und **3** des Binokulars liegt. Mit dem Pfeil **6** wird hierbei die mögliche Drehbewegung der Platte **4** dokumentiert. Auf der Platte **4** sind drei Glaswürfel **7, 8** und **9** versetzt angeordnet, wobei sich die Glaswürfel **8** und **9** jeweils in einem der Beobachtungsstrahlengänge **2** und **3** befinden.

Während der im Beobachtungsstrahlengang **2** befindliche Glaswürfel **9** über keine optische Wirkung verfügt, ist der im Beobachtungsstrahlengang **3** befindliche Glaswürfel **8** als Strahlteilerwürfel ausgeführt und dient der Auskopplung eines Teiles der Strahlung des Beobachtungsstrahlenganges **3** in den gemeinsamen Dokumentationsstrahlengang **10.**

Die untere Abbildung der **Figur 2** zeigt wiederum eine schematische Darstellung der Auskopplung, senkrecht von oben in Bezug auf die von den Beobachtungsstrahlengängen aufgespannte Ebene gesehen.

Von dem im Beobachtungsstrahlengang **3** befindlichen Strahlteilerwürfel **8** wird ein Teil der Strahlung **3'** des Beobachtungsstrahlenganges **3** als Dokumentationsstrahl **10'** in den Dokumentationsstrahlengang **10** ausgekoppelt. Der Strahlteilerwürfel **8** ist so auf der Platte **4** angeordnet, dass die Auskopplung der Strahlung **10'** in den Dokumentationsstrahlengang **10** ebenfalls im Winkel von 90° nach links erfolgt. Von dem im Beobachtungsstrahlengang **2** befindlichen Glaswürfel **9** wird der Strahlung **2'** des Beobachtungsstrahlenganges **2** nicht beeinflusst. Die Dicke der für die Darstellung der Strahlungen **2', 3'** und **10'** genutzten Pfeile soll auch hier gleichzeitig exemplarisch den Energiefluss dokumentieren.

Da der Lichtweg im Allgemeinen umkehrbar ist, können alle beschriebenen Auskoppelvarianten auch dazu genutzt werden, um Informationen in ein optisches System einzukoppeln.

Bei ausschließlicher Nutzung der Vorrichtung müssen dann die Strahlteiler um 180° so gedreht werden, dass die Lichtenergie zum Betrachter hin abgelenkt wird.

Einer vierten vorteilhaften Ausgestaltung entsprechend ist zusätzlich ein Display zur Einkopplung von Daten, Bildern oder Informationen vorhanden, welches dem gemeinsamen Dokumentationsstrahlengang gegenüber angeordnet ist. Ein- und Auskopplung erfolgen dabei unabhängig voneinander, können aber auch kombiniert werden.

Besonders vorteilhaft ist bei dieser Variante, dass für die Einkopplung der Daten, Bilder oder Informationen das optische Element mit strahlteilender Wirkung verwendet wird, welches sich jeweils im Beobachtungsstrahlengang befindet und die Auskopplung der Dokumentationsstrahlung realisiert.

Über dieses Display lassen sich beliebige Informationen in einen der Beobachtungsstrahlengänge eingespiegelt.

Da am Strahlteiler nur ein Teil der Lichtenergie in Richtung Beobachter abgelenkt wird und der restliche Teil in Richtung Bildgebung durch das strahlteilende Element durchtritt, ist es sinnvoll, dass während des Aufnehmens von Bilddaten im Dokumentationsstrahlengang die Einspiegelung von Informationen kurz abgeschaltet wird, wobei die Abschaltung mit der Bildaufnahme synchronisiert werden kann. Dadurch werden mögliche Überlagerungen des zu dokumentierenden Bildes mit den eingespiegelten Informationen verhindert.

Weiterhin kann über das Display beispielsweise angezeigt werden, aus welchem der Beobachtungsstrahlengänge momentan die Auskopplung und auch Einspiegelung erfolgt. Dies ist dann sinnvoll, wenn die Umschaltung zwischen den Beobachtungsstrahlengängen motorisch erfolgt und ein Hebel dessen Stellung diese Information zeigt vorhanden ist.

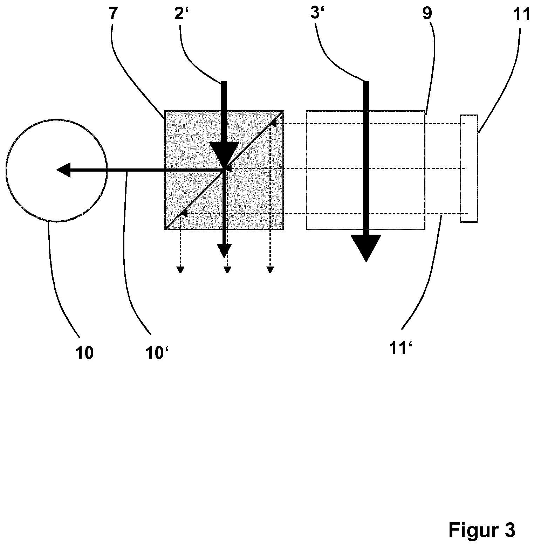

Hierzu zeigt die **Figur 3** eine schematische Darstellung der erfinderischen Lösung zur Auskopplung und Einspiegelung aus dem/in den linken Beobachtungsstrahlengang eines Binokulars.

Die schematische Darstellung der Auskopplung und Einspiegelung entspricht den unteren Abbildungen der **Figuren 1** und **2****,** bei denen die Blickrichtung senkrecht von oben auf die von den Beobachtungsstrahlengängen aufgespannte Ebene gerichtet ist.

Von dem im Beobachtungsstrahlengang **2** befindlichen Strahlteilerwürfel **7** wird ein Teil der Strahlung **2'** des Beobachtungsstrahlenganges **2** als Dokumentationsstrahl **10'** in einen Dokumentationsstrahlengang **10** ausgekoppelt. Der Strahlteilerwürfel **7** ist so auf der Platte **4** angeordnet, dass die Auskopplung der Strahlung **10'** in den Dokumentationsstrahlengang **10** im Winkel von 90° nach links erfolgt. Von dem im Beobachtungsstrahlengang **3** befindlichen Glaswürfel **9** wird der Strahlung **3'** des Beobachtungsstrahlenganges **3** nicht beeinflusst. Die vom Display **11** erzeugte Information wird als Strahlung **11'** über den Strahlteilerwürfel **7** in den Beobachtungsstrahlengang **2** eingespiegelt. Die Teilerschicht des Strahlteilerwürfels **7** übernimmt in diesem Fall sowohl die Auskopplung der Strahlung **2'** aus dem, als auch die Einspiegelung der Strahlung **11'** in den Beobachtungsstrahlenganges **2.**

Von dem im Beobachtungsstrahlengang **3** befindlichen Glaswürfel **9** wird auch die vom Display **11** erzeugte Strahlung **11'** nicht beeinflusst.

Die Dicke der für die Darstellung der Strahlungen **2', 3`, 10'** und **11'** genutzten Pfeile soll auch hier gleichzeitig exemplarisch den Energiefluss dokumentieren. Die in den Beobachtungsstrahlenganges **2** eingespiegelte Strahlung **11'** ist als gestrichelte Linie dargestellt.

Die in der **Figur 3** gezeigte schematische Darstellung der erfinderischen Lösung gilt analog auch für die Auskopplung und Einspiegelung aus dem/in den rechten Beobachtungsstrahlengang eines Binokulars. Da die Auskopplung und die Einspiegelung aus dem und in den Beobachtungsstrahlenganges **3** erfolgen, werden diese Funktionen von der Teilerschicht des Strahlteilerwürfels **8** übernommen.

Einer weiteren vorteilhaften Ausgestaltung entsprechend kann die erfinderische Vorrichtung zur Auskopplung von Bilddaten aus einem wählbaren Beobachtungsstrahlengang eines Binokulars durch spektralabhängige Filter ergänzt werden, die im Beobachtungs- und/oder im Dokumentationsstrahlengang angeordnet werden und wahlweise in den Strahlengang einbringbar sind. Vorzugsweise sind die spektralabhängigen Filter dazu auf einem Filterrad o. ä. angeordnet, welches über einen motorischen Antrieb verfügt.

Mit Hilfe der spektralabhängigen Filter können wellenlängenspezifische Beobachtungssituationen erzeugt und dazugehörige Bildaufnahmen dokumentiert werden. Hierbei ist es sogar möglich im Beobachtungsstrahlengang eine andere spektrale Charakteristik zu erzeugen als im Dokumentationsstrahlengang. Durch eine motorische Verstellung der spektralabhängige Filter ist es auch möglich pseudo-multispektrale, d. h. sequentielle Aufnahmen zu realisieren.

Weiterhin kann die erfinderische Vorrichtung durch feste und/oder variable Blenden ergänzt werden, die ebenfalls im Beobachtungs- und/oder im Dokumentationsstrahlengang angeordnet werden und wahlweise in den Strahlengang einbringbar sind. Vorzugsweise sind auch die festen und/oder variablen Blenden auf einem Rad o. ä. angeordnet, welches über einen motorischen Antrieb verfügt.

Als Blenden sind hierbei sowohl feste, stufig verstellbarer Durchmesser oder stufenlos verstellbare Irisblende vorgesehen, mit denen der Schärfentiefenbereich der Beobachtungssituationen und dazugehörige Aufnahmen variiert werden kann.

Wenn die Blenden nur im Dokumentationsstrahlengang angeordnet sind, kann nur der Schärfentiefenbereich für den Dokumentationsstrahlengang variiert werden. Hierbei wird aber die Identität zwischen der visuellen Beobachtung und dem dokumentierten Bild aufgehoben. Diese Blenden können auch zu einer Belichtungsregelung der Bildaufnahme genutzt werden. Dazu sollten sie leicht zu bedienen sind.

Einer letzten vorteilhaften Ausgestaltung entsprechend können die drei optischen Bauelemente als monolithischer Block mit den entsprechend notwendigen optisch wirksamen Flächen ausgeführt sein. Dabei kann auf die drehbare Platte verzichtet werden, wenn der monolithische Block als Ganzes gedreht wird.

Diese Variante hat den Vorteil, dass Grenzflächenverluste vermieden und der Justieraufwand wesentlich verringert werden kann.

Mit der erfindungsgemäßen Lösung wird eine Vorrichtung zur Verfügung gestellt mit der ein Teil der Strahlung eines jederzeit frei wählbaren Beobachtungsstrahlenganges eines Binokulars ausgekoppelt werden kann. Dabei kann der für eine fotographische Dokumentation zu nutzende Strahlengang eines optischen Gerätes mit Binokular frei gewählt und verändert werden, ohne dass dafür bauliche Veränderungen erforderlich sind.

Mit der vorliegenden Lösung ist die Wahl extrem einfach zu realisieren und auch während der Beobachtung durch das Binokular möglich, wozu der Bediener seinen Blick nicht vom Binokular abwenden braucht.

Obwohl die vorgeschlagene Lösung vorzugsweise zur Auskopplung von Bilddaten aus einem ophthalmologischen Gerät vorgesehen ist, kann diese aber für alle optischen Systeme genutzt werden, die über ein Binokular verfügen, bei denen eine Strahlteilung eines der Beobachtungsstrahlengänge erforderlich ist und der für die Auskopplung zu nutzende Beobachtungsstrahlengang variierbar sein muss.

Die erfindungsgemäße Anordnung von nur drei optischen Elementen und die damit verbundene Mehrfachnutzung des optischen Elementes ohne optische Wirkung ermöglichen eine sehr kompakte Vorrichtung.

Im Vergleich zu ähnlichen, aus dem Stand der Technik bekannten Verstellvorrichtungen erfordert die vorliegende Lösung einen wesentlich kleineren Bauraum. Dies ist insbesondere für solche Geräte von Vorteil, bei denen der Nutzer auch an dem Gerät vorbei auf sein Objekt schauen können muss, was beispielsweise bei einer Spaltlampe der Fall ist.

Besonders vorteilhaft ist weiterhin, dass durch die drehende Verstellung ein sehr einfacher und schneller Wechsel des für die Auskopplung genutzten Beobachtungsstrahlenganges möglich wird.

## Patentansprüche

1. Vorrichtung zur Auskopplung eines Teiles der Strahlung eines Beobachtungsstrahlengang eines Binokulars mit einem Gehäuse, wobei in dem Gehäuse mit dem Binokular eine drehbare Trageinheit angeordnet ist, deren Drehachse parallel zu den Achsen der Beobachtungsstrahlengänge liegt, wobei auf dieser Trageinheit drei optische Elemente versetzt angeordnet sind, **dadurch gekennzeichnet, dass** sich ein äußeres und das mittlere optische Element in jeweils einem der Beobachtungsstrahlengänge befinden, dass sich nach Drehung der Trageinheit das mittlere und das andere äußere optische Element in jeweils einem der Beobachtungsstrahlengänge befinden und dass die beiden äußeren optischen Elemente über eine strahlteilende Wirkung verfügen und so auf der Trageinheit angeordnet sind, dass für den Fall, dass sie sich in einem der Beobachtungsstrahlengänge befinden, die Auskopplung eines Teiles der Beobachtungsstrahlung in einen gemeinsamen Dokumentationsstrahlengang erfolgt, wobei der für die Auskopplung zu nutzende Beobachtungsstrahlengang jederzeit frei wähl- und auch wechselbar ist.

2. Vorrichtung nach Anspruch 1, **dadurch gekennzeichnet**, das die drei optischen Elemente versetzt angeordnet sind, die drehbare Trageinheit einen Drehbereich von +/- 90° hat und in deren Endlagen über Anschläge oder Raststellungen verfügt.

3. Vorrichtung nach den Ansprüchen 1 und 2, **dadurch gekennzeichnet, dass** an der drehbaren Trageinheit ein Betätigungselement mit oder ohne Getriebe angeordnet ist.

4. Vorrichtung nach den Ansprüchen 1 und 2, **dadurch gekennzeichnet, dass** ein Betätigungselement in Form eines Schalters vorhanden ist, der mit einem, an der drehbaren Trageinheit angeordneten motorischen Antrieb verbunden ist.

5. Vorrichtung nach den Ansprüchen 1 und 2, **dadurch gekennzeichnet, dass** der Bedienmechanismus der drehbaren Trageinheit bi-stabil ausgestaltet ist.

6. Vorrichtung nach den Ansprüchen 1 bis 5, **dadurch gekennzeichnet, dass** die Trageinheit eine Platte ist.

7. Vorrichtung nach Anspruch 1, **dadurch gekennzeichnet**, das als optische Elemente mit strahlteilender Wirkung Strahlteilerwürfel oder planparallele Platte Verwendung finden.

8. Vorrichtung nach den Ansprüchen 1 und 2, **dadurch gekennzeichnet, dass** die optischen Elemente mit strahlteilender Wirkung der Auskopplung eines Teiles der Beobachtungsstrahlung in einen gemeinsamen Dokumentationsstrahlengang dienen, wobei der Anteil der ausgekoppelten Strahlung bis zu 80%, vorzugsweise bis zu 50% beträgt.

9. Vorrichtung nach Ansprüchen 1 und 8, **dadurch gekennzeichnet, dass** der gemeinsame Dokumentationsstrahlengang einen Winkel von 90° zu den Beobachtungsstrahlengängen einschließt.

10. Vorrichtung nach Anspruch 1, **dadurch gekennzeichnet, dass** der gemeinsame Dokumentationsstrahlengang über eine Kamera zur Aufnahme der Bilddaten verfügt.

11. Vorrichtung nach Anspruch 1, **dadurch gekennzeichnet, dass** das zwischen den beiden äußeren optischen Elemente angeordnete, mittlere optische Bauelement keine optische Wirkung aufweist.

12. Vorrichtung nach Anspruch 1, **dadurch gekennzeichnet, dass** das zwischen den beiden äußeren optischen Elemente angeordnete, mittlere optische Bauelement eine strahlschwächende Wirkung aufweist.

13. Vorrichtung nach den Ansprüchen 1 und 2, **dadurch gekennzeichnet, dass** gegenüber dem gemeinsamen Dokumentationsstrahlengang zusätzlich ein Display zur Einkopplung von Daten, Bildern oder Informationen vorhanden ist.

14. Vorrichtung nach Ansprüchen 1 und 13, **dadurch gekennzeichnet, dass** für die Einkopplung der Daten, Bilder oder Informationen das sich jeweils im Beobachtungsstrahlengang befindliche optische Elemente mit strahlteilender Wirkung Verwendung findet.

15. Vorrichtung nach Anspruch 1, **dadurch gekennzeichnet, dass** im Beobachtungsstrahlengang und/oder im Dokumentationsstrahlengang spektralabhängige Filter angeordnet und wahlweise in den Strahlengang einbringbar sind.

16. Vorrichtung nach Anspruch 15, **dadurch gekennzeichnet, dass** die spektralabhängigen Filter auf einem Filterrad o. ä. angeordnet sind, welches über einen motorischen Antrieb verfügt.

17. Vorrichtung nach Anspruch 1, **dadurch gekennzeichnet, dass** im Beobachtungsstrahlengang und/oder im Dokumentationsstrahlengang feste und/ oder variable Blenden angeordnet und wahlweise in den Strahlengang einbringbar sind.

18. Vorrichtung nach Anspruch 17, **dadurch gekennzeichnet, dass** die festen und/oder variablen Blenden auf einem Rad o. ä. angeordnet sind, welches über einen motorischen Antrieb verfügt.

19. Vorrichtung nach Anspruch 1, **dadurch gekennzeichnet, dass** die drei optischen Bauelemente als monolithischer Block mit den entsprechend notwendigen optisch wirksamen Flächen ausgeführt sind.

## Claims

1. Device for outcoupling a portion of the radiation of an observation beam path of a binocular eyepiece with a housing, wherein a rotatable supporting unit, the axis of rotation of which is parallel to the axes of the observation beam paths, is arranged in the housing having the binocular eyepiece, wherein three optical elements are arranged offset on this supporting unit, **characterized in that** an outer and the middle optical element are each located in one of the observation beam paths, **in that**, after rotation of the supporting unit, the middle and the other outer optical element are each located in one of the observation beam paths and **in that** the two outer optical elements have a beam-splitting effect and are arranged on the supporting unit such that, for the case that they are located in one of the observation beam paths, a portion of the observation radiation is outcoupled into a common documentation beam path, wherein the observation beam path to be used for the outcoupling is freely selectable and also changeable at any time.

2. Device according to Claim 1, **characterized in that** the three optical elements are arranged offset, the rotatable supporting unit has a rotation range of +/- 90° and has abutments or latching positions in its end positions.

3. Device according to Claims 1 and 2, **characterized in that** an actuating element with or without gears is arranged at the rotatable supporting unit.

4. Device according to Claims 1 and 2, **characterized in that** there is an actuating element in the form of a switch, which is connected to a motorized drive arranged at the rotatable supporting unit.

5. Device according to Claims 1 and 2, **characterized in that** the operating mechanism of the rotatable supporting unit is embodied bistably.

6. Device according to Claims 1 to 5, **characterized in that** the supporting unit is a plate.

7. Device according to Claim 1, **characterized in that** beam-splitter cubes or plane-parallel plates are used as optical elements having a beam-splitting effect.

8. Device according to Claims 1 and 2, **characterized in that** the optical elements having a beam-splitting effect serve to outcouple a portion of the observation radiation into a common documentation beam path, wherein the proportion of the outcoupled radiation is up to 80%, preferably up to 50%.

9. Device according to Claims 1 and 8, **characterized in that** the common documentation beam path encloses an angle of 90° with the observation beam paths.

10. Device according to Claim 1, **characterized in that** the common documentation beam path has a camera for recording the image data.

11. Device according to Claim 1, **characterized in that** the middle optical component arranged between the two outer optical elements has no optical effect.

12. Device according to Claim 1, **characterized in that** the middle optical component arranged between the two outer optical elements has a beam-attenuating effect.

13. Device according to Claims 1 and 2, **characterized in that** there is in addition a display for incoupling data, images or information opposite the common documentation beam path.

14. Device according to Claims 1 and 13, **characterized in that** the optical element having a beam-splitting effect, respectively located in the observation beam path, is used for incoupling the data, images or information.

15. Device according to Claim 1, **characterized in that** spectrally dependent filters are arranged in the observation beam path and/or in the documentation beam path and are selectively insertable into the beam path.

16. Device according to Claim 15, **characterized in that** the spectrally dependent filters are arranged on a filter wheel or similar, which has a motorized drive.

17. Device according to Claim 1, **characterized in that** fixed and/or variable stops are arranged in the observation beam path and/or in the documentation beam path and are selectively insertable into the beam path.

18. Device according to Claim 17, **characterized in that** the fixed and/or variable stops are arranged on a wheel or similar, which has a motorized drive.

19. Device according to Claim 1, **characterized in that** the three optical components are embodied as a monolithic block having the correspondingly necessary optically effective surfaces.

## Revendications

1. Dispositif d'extraction d'une partie du rayonnement d'un trajet optique d'observation d'une binoculaire munie d'un boîtier, dans lequel une unité de support rotative, dont l'axe de rotation est parallèle aux axes des trajets optiques d'observation, est agencée avec la binoculaire dans le boîtier, dans lequel trois éléments optiques sont agencés de manière décalée sur ladite unité de support, **caractérisé**
**en ce qu'**un élément optique extérieur et l'élément optique central se trouvent respectivement sur l'un des trajets optiques d'observation,
**en ce que**, après rotation de l'unité de support, l'élément optique central et l'autre élément optique extérieur se trouvent respectivement sur l'un des trajets optiques d'observation, et en ce que les deux éléments optiques extérieurs présentent un effet de division de faisceaux et sont agencés sur l'unité de support de telle manière que, dans le cas où ils se trouvent sur l'un des trajets optiques d'observation, l'extraction d'une partie du faisceau d'observation s'effectue sur un trajet optique de documentation commun, dans lequel le trajet optique d'observation à utiliser pour le l'extraction peut être sélectionné et remplacé librement à tout moment.

2. Dispositif selon la revendication 1, **caractérisé en ce que** les trois éléments optiques sont agencés de manière décalée, l'unité de support rotative présente une plage de rotation de +/- 90° et est dotée de butées ou de points d'arrêt à ses positions d'extrémité.

3. Dispositif selon les revendications 1 et 2, **caractérisé en ce qu'**un élément d'actionnement avec ou sans engrenage est agencé sur l'unité de support rotative.

4. Dispositif selon les revendications 1 et 2, **caractérisé en ce qu'**il est prévu un élément d'actionnement sous la forme d'un commutateur qui est relié à un entraînement motorisé agencé sur l'unité de support rotative.

5. Dispositif selon les revendications 1 et 2, **caractérisé en ce que** le mécanisme de commande de l'unité de support rotative est conçu de manière bistable.

6. Dispositif selon les revendications 1 à 5, **caractérisé en ce que** l'unité de support est une plaque.

7. Dispositif selon la revendication 1, **caractérisé en ce que** des cubes diviseurs de faisceau ou des lames à faces planes et parallèles sont utilisés comme éléments optiques ayant un effet de division de faisceaux.

8. Dispositif selon les revendications 1 et 2, **caractérisé en ce que** les éléments optiques à effet de division de faisceaux servent à l'extraction d'une partie du faisceau d'observation sur un trajet optique de documentation commun, la proportion du rayonnement extrait allant jusqu'à 80%, de préférence jusqu'à 50%.

9. Dispositif selon les revendications 1 et 8, **caractérisé en ce que** le trajet optique de documentation commun forme un angle de 90° par rapport aux trajets optiques d'observation.

10. Dispositif selon la revendication 1, **caractérisé en ce que** le trajet optique de documentation commun est doté d'une caméra destinée à acquérir les données d'image.

11. Dispositif selon la revendication 1, **caractérisé en ce que** le composant optique central agencé entre les deux éléments optiques extérieurs ne présente pas d'effet optique.

12. Dispositif selon la revendication 1, **caractérisé en ce que** le composant optique central agencé entre les deux éléments optiques extérieurs présente un effet d'atténuation du faisceau.

13. Dispositif selon les revendications 1 et 2, **caractérisé en ce qu'**il est en outre prévu, en face du trajet optique de documentation commun, un afficheur destiné à l'injection de données, d'images ou d'informations.

14. Dispositif selon les revendications 1 et 13, **caractérisé en ce que** l'élément optique se trouvant respectivement sur le trajet optique d'observation et présentant un effet de division de faisceaux est utilisé pour l'injection des données, des images ou des informations.

15. Dispositif selon la revendication 1, **caractérisé en ce que** des filtres dépendant du spectre sont agencés dans le trajet optique d'observation et/ou dans le trajet optique de documentation et peuvent être introduits sélectivement dans le trajet optique.

16. Dispositif selon la revendication 15, **caractérisé en ce que** les filtres dépendant du spectre sont agencés sur une roue de filtres ou autre, qui est dotée d'un entraînement motorisé.

17. Dispositif selon la revendication 1, **caractérisé en ce que** des diaphragmes fixes et/ou variables sont agencés sur le trajet optique d'observation et/ou sur le trajet optique de documentation et peuvent être introduits sélectivement dans le trajet optique.

18. Dispositif selon la revendication 17, **caractérisé en ce que** les diaphragmes fixes et/ou variables sont agencés sur une roue, ou autre, qui est dotée d'un entraînement motorisé.

19. Dispositif selon la revendication 1, **caractérisé en ce que** les trois composants optiques sont réalisés sous forme de bloc monolithique présentant les surfaces optiquement actives nécessaires correspondantes.
